# EUROPEAN PATENT APPLICATION

(11) **EP 4 456 204 A1**
(43) Date of publication of application: **30.10.2024**
(21) Application number: 22910811.3
(22) Date of filing: 01.12.2022
(51) Int. Cl.: H01M 4/88, B01J 23/648, B01J 37/00, B01J 37/08, H01M 4/92

(54) **METHOD FOR PRODUCING CATALYTIC NOBLE METAL-CARRYING CONDUCTIVE OXIDE PARTICLES**

(30) Priority: 21.12.2021 JP 2021207071
(71) Applicant: CATALER CORPORATION, Kakegawa-shi, Shizuoka 437-1492 (JP); Hiroshima University, Higashihiroshima-shi Hiroshima 739-8511 (JP)
(72) Inventor: TAKANO, Aoi, Kakegawa-shi, Shizuoka 437-1492 (JP); HORIUCHI, Yosuke, Kakegawa-shi, Shizuoka 437-1492 (JP); OGI, Takashi, Higashihiroshima-shi, Hiroshima 739-8511 (JP)
(74) Representative: Ricker, Mathias
(86) International application number: PCT/JP2022/044410
(87) International publication number: WO 2023/120094

(57) **Abstract**

This method for producing catalyst particles, which are for an electrochemical reaction and in which catalytic noble metal particles are carried on conductive oxide particles, comprises: using metal atom-containing organic compounds as a precursor of the conductive oxide particles and a precursor of the catalytic noble metal particles, and dissolving the metal atom-containing organic compounds in an organic solvent to obtain a precursor solution; and spraying and combusting the precursor solution.

## Description

### FIELD

The present invention relates to a method for producing noble metal catalyst supporting conductive oxide particles.

Electrode catalysts used in electrodes of electrochemical cells such as fuel cells generally have a structure in which noble metal catalyst particles are supported on the surfaces of support particles composed of a conductive carbon material. The conductive carbon material is carbon black, for example, and the noble metal catalyst is ,e.g., platinum.

One problem with using such a catalyst is that the performance of the electrochemical cell decreases with ongoing operating time. The decreasing performance is thought to occur because the conductive carbon material serving as the support for the electrode catalyst becomes oxidized due to the change in potential during operation of the electrochemical cell, resulting in aggregation and shedding of the supported noble metal particles.

In order to avoid this inconvenience resulting from use of the conductive carbon material, it has been proposed to use non-carbon based conductive metal oxide supports as supports for electrode catalysts in electrochemical cells. For example, PTL 1 proposes using Sb-doped SnO₂ as an electrode catalyst support.

Incidentally, it has also been proposed in recent years to synthesize composite particles having noble metal catalyst particles supported on a conductive metal oxide support, by the method of Flame Spray Pyrolysis (FSP).

For example, NPL 1 describes synthesis of Pt/TiO₂ particles with a Pt loading weight of 1 wt% or lower by FSP using an acetonitrile solution of Ti(OiPr)₄ and Pt(acac)₂, and the use of the Pt/TiO₂ particles as a catalyst for photocatalytic removal of NOx.

NPL 2 describes synthesis of Au-Pt/TiO₂ particles with a total loading weight of 1 wt% for Au and Pt, by FSP using a precursor solution comprising HAuCl₄, H₂PtCL₆ and Ti(OBu)₄ dissolved in a mixed solvent of xylene/EtOH (4/1 volume ratio), and the use of the Au-Pt/TiO₂ particles as a catalyst for oxygen oxidation of CO.

### [CITATION LIST]

### [PATENT LITERATURE]

[PTL 1] Japanese Patent Public Inspection No. 2012-514287

### [NON PATENT LITERATURE]

[NPL 1] Applied Catalysis B: Environmental, 226(2018), 127-134
[NPL 2] Applied Surface Science, 521(2020), 146447

### SUMMARY

### [TECHNICAL PROBLEM]

A problem encountered when using a conductive metal oxide support as a support for an electrochemical cell electrode catalyst is that the catalytic activity is insufficient and the output of the electrochemical cell is low.

The present invention has been completed in light of these circumstances. It is an object of the invention to provide a method for producing noble metal catalyst supporting conductive oxide particles that have high electrochemical activity and can maintain high initial activity for long periods.

### [SOLUTION TO PROBLEM]

The present invention is as follows.

### <Aspect 1>

A method for producing catalyst particles for electrochemical reaction, comprising noble metal catalyst particles supported on conductive oxide particles, the method including:
using metal atom-containing organic compounds as both a precursor for the conductive oxide particles and a precursor for the noble metal catalyst particles, dissolving them in an organic solvent to obtain a precursor solution, and
spraying the precursor solution and burning it.

### <Aspect 2>

The method according to aspect 1, wherein the loading weight of the noble metal catalyst particles is 1.5 mass% or greater, with 100 mass% as the total mass of the catalyst particles.

### <Aspect 3>

The method according to aspect 1 or 2, wherein the noble metal catalyst particles are platinum particles.

### <Aspect 4>

The method according to aspect 3, wherein the precursor for the noble metal catalyst particles is a platinum complex compound.

### <Aspect 5>

The method according to any one of aspects 1 to 4, wherein the metal atom-containing organic compound is one or more selected from among metal alkoxides, organic acid salts and complex compound.

### <Aspect 6>

The method according to any one of aspects 1 to 5, wherein the conductive oxide particles are tin oxide particles doped with one or more elements selected from among niobium, tantalum, tungsten, antimony and bismuth.

### <Aspect 7>

The method according to aspect 6, wherein the conductive oxide particles are tin oxide particles doped with niobium.

### <Aspect 8>

The method according to aspect 7, wherein the precursors for the conductive oxide particles are a tin carboxylate and a niobium alkoxide.

### <Aspect 9>

The method according to any one of aspects 1 to 8, wherein the organic solvent includes a solvent having an enthalpy of combustion of 3,000 kJ/mol or higher.

### <Aspect 10>

The method according to any one of aspects 1 to 9, wherein the catalyst particles are a fuel cell electrode catalyst.

### <Aspect 11>

Catalyst particles for electrochemical reaction, comprising noble metal catalyst particles supported on conductive oxide particles,
wherein in measurement by cyclic voltammetry (CV) under a nitrogen atmosphere using an electrode comprising catalyst particles as the working electrode, a reversible hydrogen electrode (RHE) as the reference electrode, and a Pt wire electrode as the counter electrode,
a peak is observed near 0.4 V (vs.RHE) when sweeping in the direction of increasing potential and the direction of decreasing potential.

### <Aspect 12>

Particles according to aspect 11, which are a fuel cell electrode catalyst.

### [ADVANTAGEOUS EFFECTS OF INVENTION]

The present invention provides a method for producing catalyst particles for electrochemical reaction that have high electrochemical activity and can maintain the high initial activity for long periods. The catalyst particles for electrochemical reaction obtained by the method of the invention have high electrochemical activity and a long usable life, and are suitable as a catalyst for electrochemical reaction and especially as a fuel cell electrode catalyst.

### BRIEF DESCRIPTION OF DRAWINGS

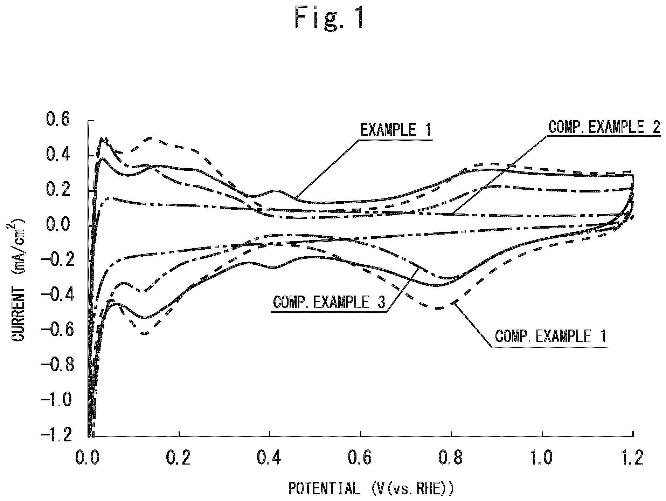

Fig. 1 is a CV chart obtained for the catalyst particles for electrochemical reaction of Example 1 and Comparative Examples 1 to 3.

### DESCRIPTION OF EMBODIMENTS

### <Method for producing catalyst particles for electrochemical reaction>

The method for producing catalyst particles for electrochemical reaction of the invention is a method for producing catalyst particles for electrochemical reaction that comprise noble metal catalyst particles supported on conductive oxide particles, the method including:
using metal atom-containing organic compounds as both the precursor for the conductive oxide particles and the precursor for the noble metal catalyst particles, dissolving them in an organic solvent to obtain a precursor solution, and
spraying the precursor solution and burning it.

The invention is a method of FSP using specific metal atom-containing organic compounds as precursors for the conductive oxide particles and the noble metal catalyst particles, after dissolving them in an organic solvent, and preferably an organic solvent with high enthalpy of combustion. The method produces catalyst particles for electrochemical reaction comprising a noble metal catalyst supported on conductive oxide particles. The catalyst particles for electrochemical reaction with a high loading weight can maintain high electrochemical activity and high initial activity for long periods.

The elements of the method for producing catalyst particles for electrochemical reaction of the invention will now be explained in order.

### <Precursor solution>

The precursor solution used in the method of the invention is a solution containing a precursor for the conductive oxide particles and a precursor for the noble metal catalyst particles, dissolved in an organic solvent.

Metal atom-containing organic compounds may be used for both the precursor for the conductive oxide particles and the precursor for the noble metal catalyst particles. The term "metal atom-containing organic compound" refers to a compound, salt or complex compound containing a metal atom, a carbon atom and a hydrogen atom. The metal atom-containing organic compound may also optionally contain one or more atoms selected from among oxygen, nitrogen and sulfur atoms. The metal atom-containing organic compound of the invention does not need to contain halogen atoms or silicon atoms.

The number of metal atoms per metal atom-containing organic compound may be one, two or more. However, the metal atom-containing organic compound will typically contain one metal atom for the purpose of the invention.

The precursor for the conductive oxide particles and the precursor for the noble metal catalyst particles may each be liquid metal atom-containing organic compounds at ordinary temperature (25°C) and ordinary pressure (1 atm). The reason that particles become non-uniform or coarse in conventional particle synthesis by FSP is believed to be due to deposition (solidification) of the precursor compounds in the sprayed droplets. Therefore if the precursors used are metal atom-containing organic compounds, and especially metal atom-containing organic compounds that are liquid at ordinary temperature and ordinary pressure, then decomposition of the precursor compounds will be accelerated, inhibiting their deposition (solidification) and resulting in uniform nanosize catalyst particles for electrochemical reaction.

Metal atom-containing organic compounds that are liquid at ordinary temperature and ordinary pressure may be one or more selected from among metal alkoxides, metal organic acid salts and metal complex compound, for example.

### (Precursors for conductive oxide particles)

Conductive oxide particles in the catalyst particles for electrochemical reaction to be produced by the method of the invention may be tin oxide particles doped with one or more elements selected from among niobium, tantalum, tungsten, antimony and bismuth.

In the method of the invention, the precursor solution contains a precursor of one or more elements selected from among niobium, tantalum, tungsten, antimony and bismuth (doping elements), and a tin oxide precursor, thus producing doped tin oxide particles.

The doping element precursor may be a predetermined metal alkoxide, for example. When the predetermined metal can adopt multiple stable oxidation numbers, the oxidation number of the metal in the metal alkoxide may be any of its stable oxidation numbers. The number of carbon atoms of the alkoxyl group in the alkoxide may be 1 or more, two or more, 3 or more or 4 or more, and 10 or less, 8 or less, 6 or less, 4 or less or 3 or less. When the number of carbon atoms of the alkoxyl group is 3 or more, the alkoxyl group may be linear or branched.

The precursor of the tin oxide particles may be a tin carboxylate, for example. The tin in the tin carboxylate may be of valency II or valency IV. The number of carbon atoms of the alkyloxycarbonyl group in the tin carboxylate may be two or more, 4 or more, 6 or more or 8 or more, and 20 or less, 18 or less, 16 or less, 14 or less, 12 or less or 10 or less, including the carbonyl carbon. When the number of carbon atoms of the alkyloxycarbonyl group is 4 or more, the alkyloxycarbonyl group may be linear or branched.

The conductive oxide particles in the catalyst particles for electrochemical reaction to be produced by the method of the invention are most preferably tin oxide particles doped with niobium. In this case the precursor solution may include a niobium alkoxide and a tin carboxylate, for example, and especially niobium(V) ethoxide and tin(II) 2-ethyl hexanoate.

The mixing ratio of the tin oxide particle precursor and the doping element precursor in the precursor solution may be the same as the desired tin:doping element ratio for the catalyst particles for electrochemical reaction. The number of moles of the doping element with respect to the total number of moles of the tin and doping element may be 0.5 mol% or greater, 1 mol% or greater, 2 mol% or greater, 3 mol% or greater, 4 mol% or greater or 5 mol% or greater, and 10 mol% or lower, 8 mol% or lower, 6 mol% or lower or 5 mol% or lower, for example.

### (Precursor for noble metal catalyst particles)

The noble metal catalyst particles for the catalyst particles for electrochemical reaction to be produced by the method of the invention may be platinum particles, for example. In this case the precursor for the noble metal catalyst particles may be a platinum complex compound.

A specific example for the precursor for the noble metal catalyst particles for the method of the invention is platinum bisacetylacetonate.

The content of the precursor for the noble metal catalyst particles in the precursor solution may be set as appropriate for the desired loading weight of the noble metal catalyst particles in the catalyst particles for electrochemical reaction. The loading weight of the noble metal catalyst particles in the catalyst for electrochemical reaction is preferably high from the viewpoint of ensuring adequate electrochemical activity. The content of the precursor for the noble metal catalyst particles in the precursor solution used for the invention may therefore be a relatively high value.

The content of the precursor for the noble metal catalyst particles in the precursor solution may be 1.5 mass% or greater, 2.0 mass% or greater, 5.0 mass% or greater or 8.0 mass% or greater, and 50 mass% or lower, 45 mass% or lower or 40 mass% or lower, for example, as the percentage of the mass of the noble metal catalyst particle precursor in terms of metal with respect to the total of the mass of the conductive oxide particle precursor in terms of oxide and the mass of the noble metal catalyst particle precursor in terms of metal.

### (Organic solvent)

The organic solvent in the precursor solution used in method of the invention may be any one that can dissolve the precursor for the conductive oxide particles and the precursor for the noble metal catalyst particles.

Specifically, the organic solvent used may be one or more selected from among aromatic compounds, aliphatic hydrocarbons, alcohols and polar organic solvents. Aromatic compounds include benzene, toluene, ethylbenzene, xylene, cumene and durene; aliphatic hydrocarbons include pentane, cyclopentane, hexane and cyclohexane; alcohols include methanol, ethanol, 2-propanol, isopropanol, n-butanol and benzyl alcohol; and polar organic solvents include tetrahydrofuran, acetonitrile and diethylhexanoic acid.

The organic solvent may also include one with high enthalpy of combustion. If the enthalpy of combustion of the solvent is high, the conductive oxide particle precursor and noble metal catalyst particle precursor will be instantly converted to the desired product during spray combustion of the precursor solution, which is preferred in order to reduce inconveniences such as deposition or aggregation of the precursor.

From the same viewpoint, the organic solvent may include a solvent having a high enthalpy of combustion of 3,000 kJ/mol or higher. The organic solvent used in the method of the invention may contain a high combustion enthalpy solvent at 30 mass% or greater, 50 mass% or greater, 70 mass% or greater, 80 mass% or greater, 90 mass% or greater or 95 mass% or greater with respect to the total amount of the organic solvent, or the entire organic solvent may consist of a high combustion enthalpy solvent.

The enthalpy of combustion of the high combustion enthalpy solvent may be 3,500 kJ/mol or higher, 4,000 kJ/mol or higher or 4,500 kJ/mol or higher, and 6,000 kJ/mol or lower, 5,500 kJ/mol or lower or 5,000 kJ/mol or lower.

The enthalpy of combustion of the high combustion enthalpy solvent will typically be 3,000 kJ/mol or higher and 6,000 kJ/mol or lower. The high combustion enthalpy solvent having this level of enthalpy of combustion may be an aromatic compound or an aliphatic hydrocarbon.

Since the precursor for the conductive oxide particles and the precursor for the noble metal catalyst particles have high solubility and high enthalpy of combustion, the organic solvent of the precursor solution used in the method of the invention may be an aromatic compound, and especially toluene, ethylbenzene or xylene.

The enthalpy of combustion, for the purpose of the invention, is the enthalpy of combustion of the liquid at 25°C.

The amount of organic solvent used in the precursor solution is preferably an amount such that the total concentration of the precursor for the conductive oxide particles and the precursor for the noble metal catalyst particles in the precursor solution is 0.05 mol/L or greater and 0.5 mol/L or lower.

### <Flame spray pyrolysis>

In the method of the invention, catalyst particles for electrochemical reaction are obtained by spraying and burning the aforementioned precursor solution.

Burning of the precursor solution in the method of the invention may be carried out by Flame Spray Pyrolysis (FSP). In flame spray pyrolysis, an atomized precursor solution produced using a diffusion gas stream is ignited by a spark to form a flame. The flame that is formed is a spray flame in which the spray-atomized precursor solution is burning. This spray combustion method using a spray flame differs from particle synthesis methods using diffusion flames in which starting material droplets are supplied to a previously formed flame for combustion.

When flame spray pyrolysis is used on the precursor solution containing a conductive oxide particle precursor and a noble metal catalyst particle precursor, the catalyst particles for electrochemical reaction having the noble metal catalyst particles supported on the surfaces of the conductive oxide particles are formed in a single step.

This is thought to occur because when the conductive oxide particle precursor and noble metal catalyst particle precursor in the precursor solution are reconstituted into particles after being thermally decomposed, the metal element composing the conductive oxide forms particles first, with the particles being formed by the noble metal catalyst afterwards. The time-wise order of particle formation is attributed to the difference in the vapor pressures of the metal element composing the conductive oxide and the noble metal catalyst element at the particle-forming temperature.

The diffusion gas may be an oxidizing gas such as air or oxygen. The spark is not particularly restricted so long as the atomized precursor solution can be ignited, and for example, it may be formed using methane, air or oxygen. The flow rate of the diffusion gas (the rate of the precursor solution droplets being carried into the flame) flame may be 500 m/min or higher, 1,000 m/min or higher, 1,500 m/min or higher, 2,000 m/min or higher, 2,500 m/min or higher or 3,000 m/min or higher, and 10,000 m/min or lower, 8,000 m/min or lower, 6,000 m/min or lower, 5,000 m/min or lower, 4,000 m/min or lower or 3,500 m/min or lower, for example.

The method of the invention is advantageous in that it allows control of the loading weight of the noble metal catalyst particles in the catalyst particles for electrochemical reaction. The loading weight of the noble metal catalyst particles in the catalyst particles for electrochemical reaction used in the method of the invention may be 1.5 mass% or greater, 2.0 mass% or greater, 5.0 mass% or greater or 8.0 mass% or greater, and 50 mass% or lower, 45 mass% or lower or 40 mass% or lower, for example.

### <Catalyst particles for electrochemical reaction>

Another aspect of the invention provides catalyst particles for electrochemical reaction.

The catalyst particles for electrochemical reaction of the invention are catalyst particles for electrochemical reaction comprising noble metal catalyst particles supported on conductive oxide particles,
wherein in measurement by cyclic voltammetry (CV) under a nitrogen atmosphere using an electrode comprising catalyst particles as the working electrode, a reversible hydrogen electrode (RHE) as the reference electrode, and a Pt wire electrode as the counter electrode,
a peak is observed near 0.4 V (vs.RHE) when sweeping in the direction of increasing potential and the direction of decreasing potential.

The loading weight of the noble metal catalyst particles in the catalyst particles for electrochemical reaction of the invention is determined by the ratio of the conductive oxide particle precursor and the noble metal catalyst particle precursor in the precursor solution.

The loading weight of the noble metal catalyst particles in the catalyst particles for electrochemical reaction of the invention may be 1.5 mass% or greater, 2.0 mass% or greater, 5.0 mass% or greater or 8.0 mass% or greater, and 50 mass% or lower, 45 mass% or lower or 40 mass% or lower, where 100 mass% is the total mass of the catalyst particles.

The particle size of the conductive oxide particles in the catalyst particles for electrochemical reaction may be 5 nm or greater, 7 nm or greater, 10 nm or greater or 12 nm or greater, and 60 nm or lower, 40 nm or lower, 20 nm or lower or 15 nm or lower. The particle size of the conductive oxide particles can be adjusted by varying the initial concentration of the conductive oxide particle precursor in the precursor solution or varying the supply rate of the precursor solution during flame spray pyrolysis.

The particle size of the noble metal catalyst particles in the catalyst particles for electrochemical reaction may be smaller than the particle size of the conductive oxide particles, such as 0.5 nm or greater, 1 nm or greater, 2 nm or greater, 3 nm or greater or 4 nm or greater, and 20 nm or smaller, 15 nm or smaller, 10 nm or smaller, 8 nm or smaller, 7 nm or smaller, 6 nm or smaller or 5 nm or smaller. The particle size of the noble metal catalyst particles can be adjusted by varying the initial concentration of the noble metal catalyst particle precursor in the precursor solution or varying the supply rate of the precursor solution during flame spray pyrolysis.

In measurement by cyclic voltammetry (CV) under a nitrogen atmosphere using an electrode comprising the catalyst particles for electrochemical reaction of the invention as the working electrode, a reversible hydrogen electrode (RHE) as the reference electrode, and a Pt wire electrode as the counter electrode,
a peak is observed near 0.4 V (vs.RHE) when sweeping in the direction of increasing potential and the direction of decreasing potential.

The CV is measured by the method described in the Examples.

Since the catalyst particles for electrochemical reaction of the invention exhibit the aforementioned properties in CV measurement they are suitable as catalyst particles for electrochemical reaction. The catalyst particles for electrochemical reaction of the invention are suitable as an electrode catalyst in a fuel cell, for example, and especially as an electrode catalyst in a fuel cell air electrode.

### EXAMPLES

### <Reagents>

The starting reagents used in the Examples and Comparative Examples are as follows.
SnCl₂: 99.9%purity, by Sigma-Aldrich
NbCl₅: 99.9%purity, by Sigma-Aldrich
Nb(OC₂H₅)₅: 99.9% purity, by Sigma-Aldrich
H₂PtCl₆: 99.9%purity, By Sigma-Aldrich
Platinum bisacetylacetonate (Pt(C₅H₇O₂)₂): 99.9% purity, by Sigma-Aldrich
Tin (II) 2-ethylhexanoate (Sn(C₈H₁₅O₂)₂): 99.9% purity, by Sigma-Aldrich
Ethanol: 99.9% purity, by Sigma-Aldrich
Xylene: 99.9% purity, isomer mixture, by Sigma-Aldrich

### <Example 1>

### 1. Synthesis of particles

Tin (II) 2-ethylhexanoate (Sn(C₈H₁₅O₂)₂) and niobium ethoxide (Nb(OC₂H₅)₅) were dissolved in xylene to a total concentration (Sn + Nb) of 0.1 mol/L and an atomic ratio of Sn:Nb = 96:4. To the obtained solution there was further added platinum bisacetylacetonate (Pt(C₅H₇O₂)₂) in an amount for a Pt loading weight of 10 mass%, to prepare a precursor solution.

A syringe pump was used to supply the obtained precursor solution at a flow rate of 3 mL/min through an "AM6-type" two-fluid nozzle by Atomax. The precursor solution was atomized using an oxygen stream at a flow rate of 1.5 L/min, and ignited with a methane/air mixture spark with 1 L/min methane and 10 L/min air, forming a spray flame of the precursor solution, to synthesize Pt-supporting tin Nb-doped oxide (Pt/NTO) particles for Example 1.

The height of the spray flame during this time was approximately 16 cm, and the gas flow rate (the rate of precursor solution droplets carried into the flame) was 3,080 m/min.

The generated Pt/NTO particles were trapped using a bag filter by Horkos Corp.

### 2. Analysis

The particle size of the NTO particles was 12 nm, as calculated by the Scherrer equation from XRD of the Pt/NTO particles. The particle size of Pt was 5 nm, as calculated from a SEM image of the Pt/NTO particles.

### 3. Electrochemical measurement

A 88.9 mg portion of the Pt/NTO particles was dispersed in a mixture of 16 mL of ultrapure water and 9 mL of 2-propanol (Cica-reagent grade 1, product of Kanto Kagaku Co., Ltd.). To this dispersion there was added 81.6 mL of a Nafion^{R} dispersion (5 mass%, product of FujiFilm-Wako Pure Chemical Industries). The obtained mixture was ultrasonically dispersed for 1 hour in an ice bath.

A 10 µL portion of the ultrasonically dispersed mixture was placed on a polished glassy carbon disc and the solvent was vaporized off to form a catalyst thin-film containing the Pt/NTO particles, for use as a measuring electrode.

Using a "HR-301" rotating electrode device by Hokuto Denko Corp., with the aforementioned measuring electrode as the work electrode, a reversible hydrogen electrode (RHE) as the reference electrode and a Pt wire electrode as the counter electrode, an electrochemical measurement cell was fabricated with a 0.1 mol/L concentration HClO₄ aqueous solution as the electrolyte solution. The electrochemical measurement cell was used for cyclic voltammetry (CV) under a N₂ saturated atmosphere. The solvent temperature was set to 30°C.

In CV measurement, potential sweep was at a sweep rate of 50 mv/sec, in a range of 0 V to 1.2 V (vs.RHE) in the anodic direction (the direction of increasing potential), followed immediately by potential sweep at a sweep rate of 50 mv/sec, in a range of 1.2 V to 0 V (vs.RHE) in the cathodic direction (the direction of decreasing potential). The effective platinum surface area (ECSA) was calculated from the peak area of the peak attributed to the hydrogen adsorption wave near a potential of 0.05 V to 0.4 V (vs.RHE) when sweeping in the cathodic direction.

Fig. 1 shows a CV chart obtained by the CV measurement.

Next, O₂ gas was bubbled through the electrolyte solution of the electrochemical measurement cell, and upon O₂ saturation of the electrolyte solution the following rotating electrode measurement was conducted.

Rotating electrode measurement was conducted by potential sweep in the anodic direction (the direction of increasing potential) in a potential range of 0.1 V to 1.2 V (vs.RHE) and with a potential sweep rate of 10 mv/sec, while rotating the measuring electrode at 400 rpm under an oxygen atmosphere. Next, rotating electrode measurement was conducted by potential sweep in the cathodic direction (the direction of decreasing potential) in a potential range of 1.2 V to 0.1 V (vs.RHE) with a sweep rate of 10 mv/sec.

The ORR (Oxygen Reduction Reaction) activity of the catalyst was determined using the current value at a potential of 0.9 V (vs.RHE) during sweep in the cathodic direction. iR compensation was carried out based on the liquid resistance of the electrolyte solution.

The same rotating electrode measurement was repeated except for changing the rotational speed of the measuring electrode to 800 rpm, 1,200 rpm, 1,600 rpm, 2,000 rpm and 2,400 rpm. For measurement at each rotational speed, the ORR activity (MA) per unit mass of Pt was determined from a Koutecky-Levich plot using the current value at a potential of 0.9 V (vs.RHE) while sweeping in the cathodic direction. The ORR activity (SA) per unit mass of Pt was determined using a Koutecky-Levich plot and the value of the effective platinum area (ECSA).

The activity per unit mass of Pt (ORR mass activity, or "MA") and the activity per unit area of Pt (ORR area ratio activity, or "SA") in the ORR (Oxygen Reduction Reaction) were determined based on the rotating electrode measurement results. The results are shown in Table 1.

### <Comparative Example 1>

Tin Nb-doped oxide (NTO) particles without supported Pt were synthesized by forming a spray flame of a precursor solution in the same manner as Example 1, except that no platinum bisacetylacetonate was used during preparation of the precursor solution in "1. Synthesis of particles".

A nitric acid solution of dinitrodiamine platinum in an amount for a Pt loading weight of 10 mass% was added to a dispersion of 2 g of the obtained NTO particles in 80 g of ultrapure water, and the mixture was stirred for 15 minutes. Next, 30 g of ethanol was added as a reducing agent and the mixture was further stirred for 15 minutes, after which it was heated and stirred for 2 hours at 90°C for reduction of the Pt ion, causing deposition as Pt particles on the NTO particles, to obtain Pt/NTO particles for Comparative Example 1.

The obtained Pt/NTO particles were examined by analysis and electrochemical measurement in the same manner as Example 1. The results are shown in Table 1 and Fig. 1.

### <Comparative Example 2>

### 1. Synthesis of particles

SnCl₂ and NbCl₅ were dissolved in ethanol to a total concentration (Sn + Nb) of 0.1 mol/L and an atomic ratio of Sn:Nb = 96:4. To the obtained solution there was further added hexachloroplatinic(IV) acid (H₂PtCl₆) in an amount for a Pt loading weight of 10 mass%, to prepare a precursor solution.

An "NE-U17" ultrasonic nebulizer by Omron Healthcare was used to form droplets of the obtained precursor solution. The obtained droplets were conveyed with N₂ carrier gas at a flow rate of 3 L/min, and a diffusion flame of the precursor solution was formed with a methane/air gaseous mixture using 21 L/min methane as fuel and 5 L/min air as the oxidizing agent, in an attempt to synthesize Pt-supporting tin Nb-doped oxide (Pt/NTO) particles for Comparative Example 2.

### 2. Analysis and electrochemical measurement

The obtained particles were examined by analysis and electrochemical measurement in the same manner as Example 1. The results are shown in Table 1 and Fig. 1. In rotating electrode measurement using the particles obtained in Comparative Example 2, no analyzable polarization curve was obtained and the MA and SA could not be calculated.

### <Comparative Example 3>

Tin Nb-doped oxide (NTO) particles without supported Pt were synthesized by forming a diffusion flame of a precursor solution in the same manner as Comparative Example 2, except that no hexachloroplatinic(IV) acid was used during preparation of the precursor solution in "1. Synthesis of particles".

Pt/NTO particles for Comparative Example 3 were obtained by deposition of Pt particles on NTO particles by the same method as Comparative Example 1, except for using the obtained NTO particles.

The obtained Pt/NTO particles were examined by analysis and electrochemical measurement in the same manner as Example 1. The results are shown in Table 1 and Fig. 1.

### [Table 1]

**Table 1**

| | Synthesis of Pt/NTO particles | | | | | | | Pt/NTO particles | | | |
|---|---|---|---|---|---|---|---|---|---|---|---|
| | Sn | Nb | | Pt | | Solvent | Synthesis method | Particle size (nm) | | Electrochemical property | |
| | Sn source | Nb source | Nb doping amount (mol%) | Pt source | Loading weight (wt%) | | | NTO particles | Pt particles | MA (A/g-Pt) | SA (A/cm²-Pt) |
| Example 1 | Sn (C₈H₁₅O₂)₂ | Nb (OC₂H₅)₅ | 4 | Pt (C₅H₇O₂)₂ | 10 | Xylene | Burning all at once | 12 | 5 | 291 | 700 |
| Comp. Example 1 | Sn (C₈H₁₅O₂)₂ | Nb (OC₂H₅)₅ | 4 | Pt (C₅H₇O₂)₂ | 10 | Xylene | Burning + Pt post-loading | 12 | 5 | 205 | 409 |
| Comp. Example 2 | SnCl₂ | NbCl₅ | 4 | H₂PtCl₆ | 10 | Ethanol | Burning all at once | 30 | 46 | - | - |
| Comp. Example 3 | SnCl₂ | NbCl₅ | 4 | H₂PtCl₆ | 10 | Ethanol | Burning + Pt post-loading | 30 | 6 | 121 | 321 |

As seen in Table 1, the MA and SA values were inadequate with the Pt/NTO particles of:
Comparative Example 1 which was carried out with two steps: flame method synthesis of conductive particles and supporting of noble metal catalyst particles, using organometallic compounds as the starting materials for the conductive particles and noble metal catalyst particles, and
Comparative Example 3 which was carried out with two steps: flame method synthesis of conductive particles and supporting of noble metal catalyst particles, using inorganic metal compounds (chlorides) as the starting materials for the conductive particles and noble metal catalyst particles.

As explained above, with the particles of Comparative Example 2 which were synthesized by a method of burning all at once by a flame method using inorganic metal compounds (chlorides) as the starting materials for the conductive particles and noble metal catalyst particles, no analyzable polarization curve was obtained in rotating electrode measurement, and the MA and SA could not be calculated. The particles of Comparative Example 2 presumably did not have a structure with noble metal catalyst particles supported on conductive oxide (NTO) particles.

In contrast, high MA and SA values were exhibited by the Pt/NTO particles of Example 1 obtained by a method of burning all at once by a flame method using organometallic compounds as the starting materials for the conductive particles and noble metal catalyst particles.

In CV measurement of the Pt/NTO particles of Example 1, a peak was observed near 0.4 V during sweep in the direction of increasing potential and the direction of decreasing potential. The peak is attributed to a change in valency of the Sn atoms or Nb atoms in the NTO particles. This phenomenon is thought to occur due to the tendency of Sn atoms or Nb atoms in the particles of Example 1 to change valency by doping of the NTO particles with Pt.

It was thus verified that catalyst particles synthesized by the method of the invention exhibit excellent activity as an electrode catalyst for an air electrode in a fuel cell.

## Claims

1. A method for producing catalyst particles for electrochemical reaction that comprise noble metal catalyst particles supported on conductive oxide particles, the method including:
using metal atom-containing organic compounds as both a precursor for the conductive oxide particles and a precursor for the noble metal catalyst particles, dissolving them in an organic solvent to obtain a precursor solution, and
spraying the precursor solution and burning it.

2. The method according to claim 1, wherein the loading weight of the noble metal catalyst particles is 1.5 mass% or greater, with 100 mass% as the total mass of the catalyst particles.

3. The method according to claim 1 or 2, wherein the noble metal catalyst particles are platinum particles.

4. The method according to claim 3, wherein the precursor for the noble metal catalyst particles is a platinum complex compound.

5. The method according to any one of claims 1 to 4, wherein the metal atom-containing organic compound is one or more selected from among metal alkoxides, organic acid salts and complex compounds.

6. The method according to any one of claims 1 to 5, wherein the conductive oxide particles are tin oxide particles doped with one or more elements selected from among niobium, tantalum, tungsten, antimony and bismuth.

7. The method according to claim 6, wherein the conductive oxide particles are tin oxide particles doped with niobium.

8. The method according to claim 7, wherein the precursors for the conductive oxide particles are a tin carboxylate and a niobium alkoxide.

9. The method according to any one of claims 1 to 8, wherein the organic solvent includes a solvent having an enthalpy of combustion of 3,000 kJ/mol or higher.

10. The method according to any one of claims 1 to 9, wherein the catalyst particles are a fuel cell electrode catalyst.

11. Catalyst particles for electrochemical reaction, comprising noble metal catalyst particles supported on conductive oxide particles,
wherein in measurement by cyclic voltammetry (CV) under a nitrogen atmosphere using an electrode comprising catalyst particles as the working electrode, a reversible hydrogen electrode (RHE) as the reference electrode, and a Pt wire electrode as the counter electrode,
a peak is observed near 0.4 V (vs.RHE) when sweeping in the direction of increasing potential and the direction of decreasing potential.

12. Particles according to claim 11, which are a fuel cell electrode catalyst.
